# EUROPÄISCHE PATENTSCHRIFT

(11) **EP 0 894 831 B1**
(45) Veröffentlichungstag und Bekanntmachung des Hinweises auf die Patenterteilung: **09.10.2002**
(21) Anmeldenummer: 98113752.4
(22) Anmeldetag: 23.07.1998
(51) Int. Cl.: C09B 29/33, C08K 5/23

(54) **Chinoxalin-monoazo-acetarylid-Pigment**
Monoazo pigments of the quinoxaline-acetarylide type
Pigments monoazoiques du type quinoxaline-acétarylide

(30) Priorität: 01.08.1997 DE 19733307
(43) Veröffentlichungstag der Anmeldung: 03.02.1999
(73) Patentinhaber: Clariant GmbH, 65929 Frankfurt am Main (DE)
(72) Erfinder: Metz, Hans Joachim, Dr., 64285 Darmstadt (DE); Weber, Joachim, Dr., 65929 Frankfurt (DE)

(56) Entgegenhaltungen:
- EP-A- 0 010 722
- DE-A- 2 749 734
- DE-A- 2 800 765

## Beschreibung

Die vorliegende Erfindung betrifft neue Monoazopigmente mit Acetoacetylamino-2,3-dioxo-1,2,3,4-tetrahydro-chinoxalin als Kupplungskomponente.

Aus der DE-A1-28 00 765 sind Monoazopigmente mit Acetoacetylamino-2,3-dioxo-1,2,3,4-tetrahydro-chinoxalin als Kupplungskomponente und mit Phenoxycarbonylsubstituiertem Anilin als Diazokomponente bekannt, die jedoch Defizite hinsichtlich der Licht- und Wetterechtheit haben.

Der vorliegenden Erfindung lag die Aufgabe zugrunde, neue Azopigmente mit gelbem Farbton bereitzustellen, die über höhere Licht- und Wetterechtheit als die bislang bekannten Azogelbpigmente verfügen.

Es wurde gefunden, daß Azo-Pigmente der nachfolgenden Formel (I) überraschenderweise die gestellte Aufgabe lösen.

Gegenstand der vorliegenden Erfindung sind Verbindungen der allgemeinen Formel (I) 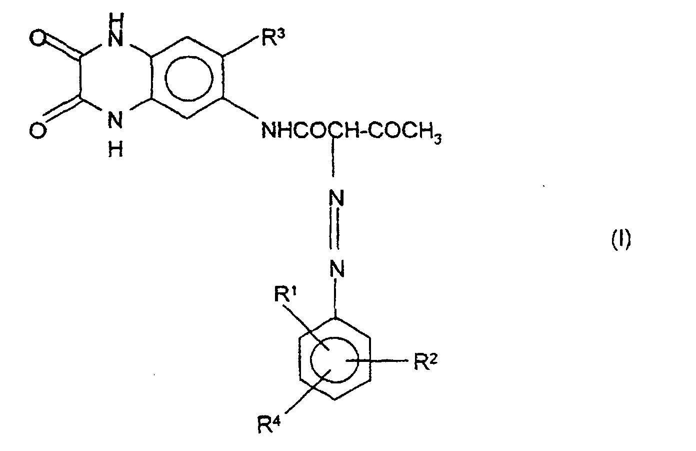 worin
- R¹ und R²: gleich oder verschieden sind und Cl, COO(C₁-C₄)-alkyl, CONH₂, CONCH₃, CON(CH₃)₂ oder SO₂NRR', wobei R und R' gleich oder verschieden sind und Wasserstoff, C₁-C₄-Alkyl, insbesondere Methyl und Ethyl, oder Phenyl, wobei Phenyl durch Methyl, Ethyl, Methoxy, Ethoxy oder Halogen substituiert sein kann, bedeuten,
- R³: Wasserstoff, Methyl, Methoxy, Ethoxy, Chlor oder Brom und
- R⁴: Wasserstoff, C₁-C₃-Alkyl, Chlor oder Brom bedeuten.

Bevorzugt sind Verbindungen der Formeln (Ia), (Ib) und (Ic) 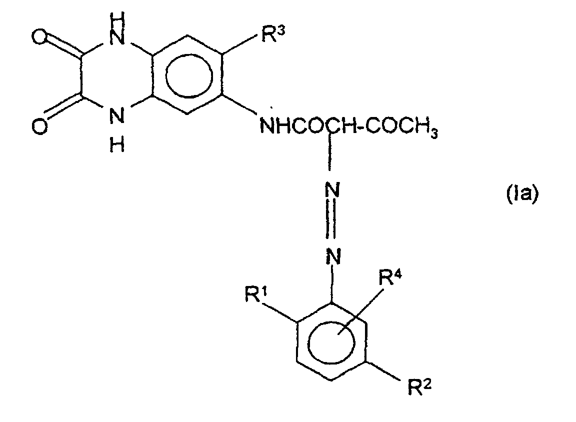 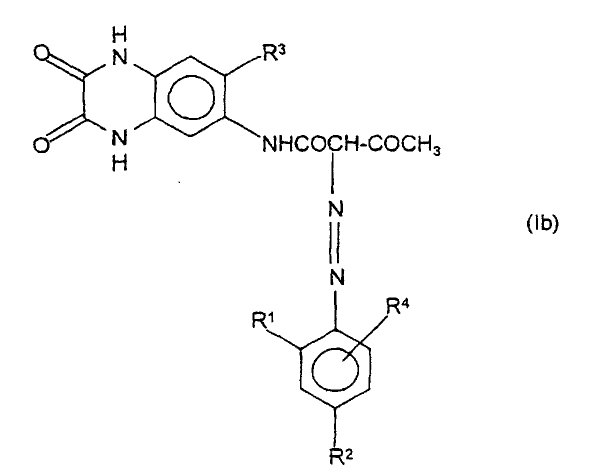 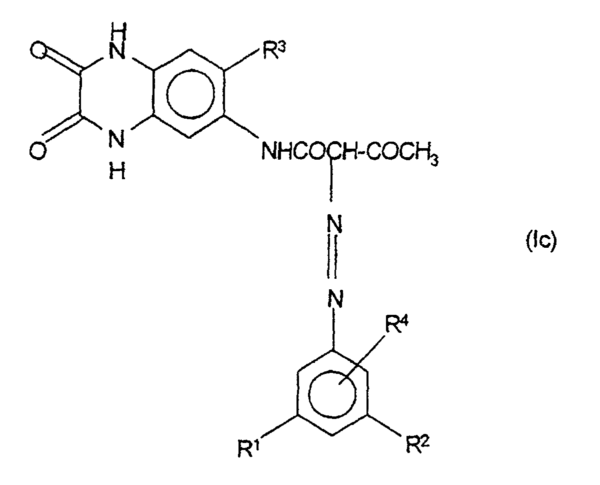 worin
die Reste R¹ und R² COOCH₃ oder COOC₂H₅,
- R³: Wasserstoff, Methyl, Methoxy oder Chlor und
- R⁴: Wasserstoff oder Methyl bedeuten.

Besonders bevorzugt im Sinne der Erfindung ist das Pigment der Formel (Id)

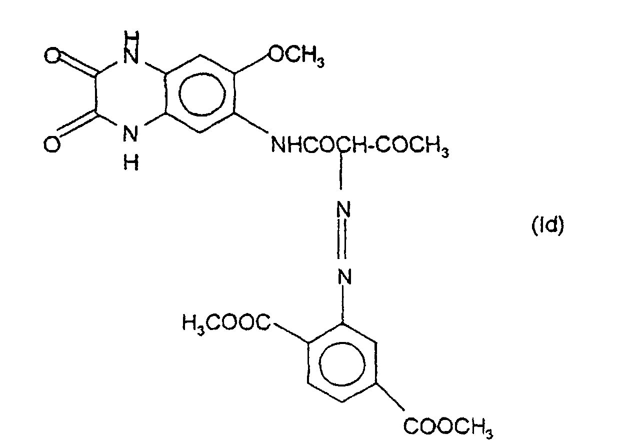

Die allgemeinen Formeln (I) und (la) bis (Id) sind als idealisierte Formeln zu verstehen und umfassen auch die entsprechenden tautomeren Verbindungen sowie die möglichen Konfigurationsisomere jeder tautomeren Form. Die Verbindungen der besagten Formeln liegen in Festkörpern normalerweise in der Hydrazonform vor. Die Formeln umfassen deshalb auch die Hydrazonform.

Gegenstand der vorliegenden Erfindung ist auch ein Verfahren zur Herstellung der erfindungsgemäßen Verbindungen der allgemeinen Formel (I), dadurch gekennzeichnet, daß man ein Amin der allgemeinen Formel (II) 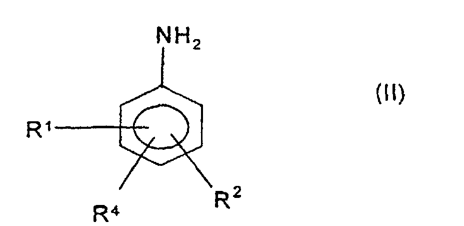 worin R¹, R², R⁴ die in Formel (I) definierten Bedeutungen haben, diazotiert und im molaren Verhältnis von 1:0,9 bis 1,1, bevorzugt 1:0,95 bis 1,05, mit einer Verbindung der Formel (III), 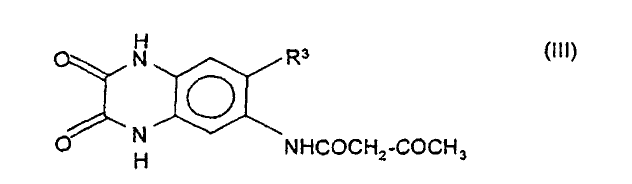 worin R³ die in Formel (I) definierte Bedeutung hat, kuppelt.

Die allgemeine Formel (III) ist als idealisierte Formel zu verstehen, die auch die entsprechenden tautomeren Verbindungen sowie die möglichen Konfigurationsisomere jeder tautomeren Form umfaßt.

Geeignete Amine der Formel (II) sind beispielsweise Aminoterephthalsäuredimethylester, Aminoterephthalsäurediethylester, Aminoisophthalsäuredimethylester, Aminoterephthalsäuremonomethylester-mono-N-methylamid, Aminoterephthalsäuremonomethylestermonoamid und 2,5-Dichloranilin.
Die Herstellung derartiger Verbindungen ist in der Literatur beschrieben und dem Fachmann allgemein bekannt.

Geeignete Kupplungskomponenten der Formel (III) sind beispielsweise N-Acetoacetyl-6-methoxy-7-amino-chinoxalin-2,3-dion, N-Acetoacetyl-6-methyl-7-amino-chinoxalin-2,3-dion, N-Acetoacetyl-6-chloro-7-amino-chinoxalin-2,3-dion, N-Acetoacetyl-7-amino-chinoxalin-2,3-dion oder N-Acetoacetyl-6-ethoxy-7-aminochinoxalin-2,3-dion. Derartige Verbindungen sind in der Literatur beschrieben, beispielsweise in der EP-A-0 010 722.

Die Herstellung der erfindungsgemäßen Verbindungen der Formel (I) erfolgt durch Kupplung der diazotierten Amine mit den genannten Kupplungskomponenten im wäßrigen Medium, gegebenenfalls in Gegenwart nichtionogener, anionischer oder kationischer oberflächenaktiver Substanzen, die einen Trübungspunkt in wäßrigem Medium haben können. Gegebenenfalls können auch weitere Hilfsmittel, wie natürliche oder synthetische Harze oder Harzderivate, oder übliche Lackfarben-, Druckfarben- oder Kunststoff-Additive verwendet werden. Die Kupplung kann auch ganz oder teilweise in organischen Lösungsmitteln erfolgen.

Die Kupplungsreaktion kann im wäßrigen Medium durchgeführt werden, indem man
a) eine Lösung des Diazoniumsalzes zu einer gepufferten Suspension oder Dispersion der Kupplungskomponente zugibt, oder
b) eine Lösung des Diazoniumsalzes und eine Lösung, Suspension oder Dispersion der Kupplungskomponente zu einer Pufferlösung oder in eine Mischdüse gleichzeitig zudosiert, oder
c) eine Lösung der Kupplungskomponente zu einer gepufferten Lösung des Diazoniumsalzes zugibt, oder
d) eine gepufferte Suspension oder Dispersion der Kupplungskomponente zu einer Lösung des Diazoniumsalzes zugibt.

Im allgemeinen wird die Kupplungsreaktion bei Temperaturen zwischen 0 und 40°C durchgeführt. Der pH-Wert kann 4 bis 6 betragen. Im erfindungsgemäßen Verfahren besonders vorteilhaft ist die Methode a.

Die erfindungsgemäßen Verbindungen der Formel (I) stellen wertvolle wasserunlösliche Farbmittel dar und können nach der Kupplungsreaktion in üblicher Weise isoliert werden. Häufig ist es zweckmäßig, die nach der Kupplungsreaktion erhaltenen Azopigmente zur Erzielung der vollen Farbstärke und einer besonders günstigen Kristallstruktur einer Nachbehandlung (Finish) zu unterwerfen. Beispielsweise kann man zu diesem Zweck die feuchten oder getrockneten Pigmente in organischen Lösungsmitteln, wie beispielsweise in tertiären Säureamiden, wie N-Methyl-2-pyrrolidon, Dimethylformamid, Dimethylacetamid, Harnstoffderivaten, wie Tetramethylharnstoff, 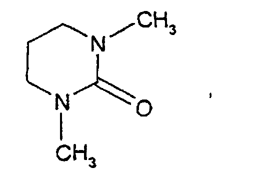 oder in dipolar-aprotischen Lösemitteln, wie Dimethylsulfoxid oder Sulfolan, einige Zeit, beispielsweise 30 Minuten bis 3 Stunden, gegebenenfalls unter erhöhtem Druck, erhitzen, zweckmäßig auf 40 bis 250°C, vorzugsweise auf 100 bis 170°C.

Die erfindungsgemäßen Verbindungen der Formel (I) eignen sich besonders zum Pigmentieren von hochmolekularen organischen Materialien. Hochmolekulare organische Materialien sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polystyrol, Polyvinylverbindungen insbesondere Polyvinylchlorid oder Polyvinylacetat, Polyolefine, insbesondere Polyethylen und Polypropylen, Polyacrylverbindungen, insbesondere Polyacrylnitril und Polyacrylsäureester, Polyester, Gummi, Casein, Silikon und Silikonharze, einzeln oder in Mischungen. Als Medium besonders bevorzugt sind Polyolefine, wie Polyethylen und Polypropylen.

Es spielt dabei keine Rolle, ob die erwähnten hochmolekularen organischen Verbindungen als plastische Massen, Schmelzen oder in Form von Spinnlösungen vorliegen oder in Lacken, Anstrichstoffen oder Druckfarben enthalten sind. Je nach Verwendungszweck erweist es sich als vorteilhaft, die erfindungsgemäß erhaltenen Pigmentzubereitungen als Verschnitte oder in Form von Präparationen oder Dispersionen zu benutzen. Bezogen auf das zu pigmentierende hochmolekulare organische Material, setzt man die erfindungsgemäßen Pigmente in einer Menge von vorzugsweise 0,1 bis 10 Gew.-% ein.

Die erfindungsgemäßen Verbindungen der Formel (I) zeichnen sich durch besonders hohe Temperaturstabilität, gute Dispergierbarkeit und hohe Farbstärke aus, insbesondere aber durch hervorragende Licht- und Wetterechtheit und Überlackierechtheit in "aqueous base coats". Aus diesem Grunde sind sie zum Pigmentieren von wäßrigen Automobilserienlackierungen besonders geeignet.

Die erfindungsgemäß hergestellten wasserunlöslichen Verbindungen der Formel (I) sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (Lit: L.B. Schein, "Electrophotography and Development Physics"; Springer Series in Electrophysics 14, Springer Verlag, 2nd Edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäß hergestellten wasserunlöslichen Verbindungen der Formel (I) geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten wasserunlöslichen Verbindungen der Formel (I) als Farbmittel in Ink-Jet Tinten auf wäßriger und nichtwäßriger Basis sowie in solchen Tinten, die nach dem hot-melt-Verfahren arbeiten, geeignet.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen, nichttrocknenden Alkydharzes ausgewählt.

Zur Beurteilung der Eigenschaften der nach der Erfindung hergestellten Pigmente auf dem Kunststoffsektor wurde aus der Vielzahl der bekannten Kunststoffe Weichpolyvinylchlorid und Polyethylen ausgewählt.

Zur Beurteilung der Eigenschaften der nach der Erfindung hergestellten Pigmente auf dem Drucksektor wurden aus der Vielzahl der bekannten Drucksysteme ein Offsetdrucksystem auf Alkydharzbasis ausgewählt.

Zur Beurteilung der Eigenschaften der nach der Erfindung hergestellten Pigmente auf dem Tonersektor wurden aus der Vielzahl der bekannten Tonersysteme ein Tonersystem auf Polyesterharzbasis ausgewählt.

In den folgenden Beispielen bedeuten Teile Gewichtsteile und Prozente Gewichtsprozente.

### Beispiel 1:

### 2-[2-oxo-1-(1,2,3,4-tetrahydro-2,3-dioxo-6-methoxy-chinoxalin-7-yl-carbamoyl)-propylazo]terephthalsäuredimethylester

0,1 mol Aminoterephthalsäuredimethylester - Hydrochlorid wird bei 0 bis 10°C mit Natriumnitrit diazotiert. Die geklärte Diazoniumsalzlösung wird bei Raumtemperatur in 1 Stunde zu einer acetatgepufferten Suspension von 0,1 mol N-Acetoacetyl-6-methoxy-7-amino-chinoxalin-2,3-dion in Gegenwart eines Tensids, z.B. ®Lutensol AT 25, zugetropft. Sobald die Kupplung beendet ist, wird auf 96°C geheizt, filtriert und salzfrei gewaschen. Der feuchte Preßkuchen wird in N-Methyl-pyrrolidon suspendiert, das Wasser wird abdestilliert und anschließend auf 100 bis 170°C erhitzt. Anschließend wird auf 70°C gekühlt, filtriert, getrocknet und gemahlen. Man erhält 51 g eines gelben Pigmentes.

### Beispiele 2 bis 14:

Die Verbindungen der Beispiele 2 bis 14 (s. Tabellen 1, 2 und 3) werden in analoger Weise hergestellt.

**Tabelle 1:**

| | Verbindung der Formel (la) | | | |
|---|---|---|---|---|
| Beispiel | R¹ | R² | R³ | R⁴ |
| 2 | COOCH₃ | COOCH₃ | H | H |
| 3 | COOCH₃ | COOCH₃ | Cl | H |
| 4 | COOCH₃ | COOCH₃ | CH₃ | H |
| 5 | COOCH₃ | CONCH₃ | OCH₃ | H |
| 6 | COOCH3 | CONH₂ | OCH₃ | H |
| 7 | Cl | Cl | OCH₃ | H |

**Tabelle 2:**

| | Verbindung der Formel (lb) | | | |
|---|---|---|---|---|
| Beispiel | R¹ | R² | R³ | R⁴ |
| 8 | COOCH₃ | COOCH₃ | H | H |
| 9 | COOCH₃ | COOCH₃ | CH₃ | H |
| 10 | COOCH₃ | COOCH₃ | Cl | H |
| 11 | COOCH₃ | COOCH₃ | OCH₃ | H |

**Tabelle 3:**

| | Verbindung der Formel (Ic) | | | |
|---|---|---|---|---|
| Beispiel | R¹ | R² | R³ | R⁴ |
| 12 | COOCH₃ | COOCH₃ | OCH₃ | H |
| 13 | COOCH₃ | COOCH₃ | Cl | H |
| 14 | COOCH₃ | COOCH₃ | CH₃ | H |

### Beispiel 15

0,5 mol Aminoterephthalsäuredimethylester in 400 ml Wasser und 150 ml 31 gew.-%iger HCI werden mit 90,5 g Na-Nitritlösung (40 %) bei 0 bis 10°C diazotiert und 1 h nachgerührt. Der Nitritüberschuß wird mit Amidosulfonsäure beseitigt. Die geklärte Diazoniumsalzlösung wird bei Raumtemperatur inherhalb von 30 Minuten zu einer acetatgepufferten Suspension von 0,5 mol N-Acetoacetyl-6-ethoxy-7-amino-chinoxalin-2,3-dion in Gegenwart eines Tensids, z.B. ®Genapol T 250, zugetropft. Nach Beendigung der Kupplung wird auf 96°C geheizt, filtriert und salzfrei gewaschen.
Der feuchte Preßkuchen wird in N-Methylpyrrolidon suspendiert, das Wasser wird abdestilliert und anschließend 2 Stunden auf 160°C erhitzt. Anschließend wird bei 70°C filtriert, getrocknet und gemahlen. Man erhält ein gelbes Pigment der Formel

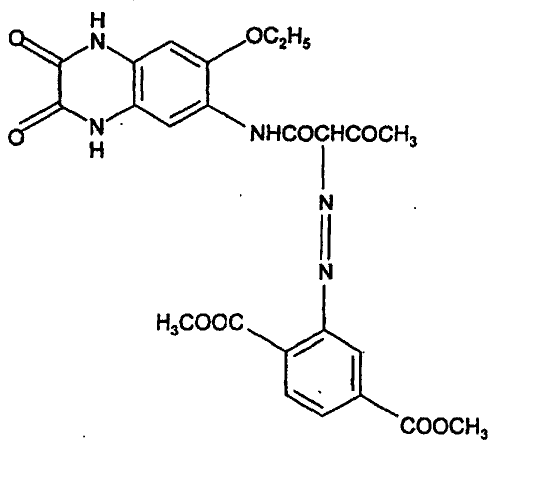

Die aus den Beispielen 1 bis 15 erhaltenen Pigmente werden nach Standardverfahren in einem "aqueous base coat" dispergiert und einer üblichen Prüfung zur Feststellung der Überlackierechtheit mit einem Weißlack unterzogen. Die Lackierung zeigt eine einwandfreie Überlackierechtheit.

## Patentansprüche

1. Verbindung der Formel (I) 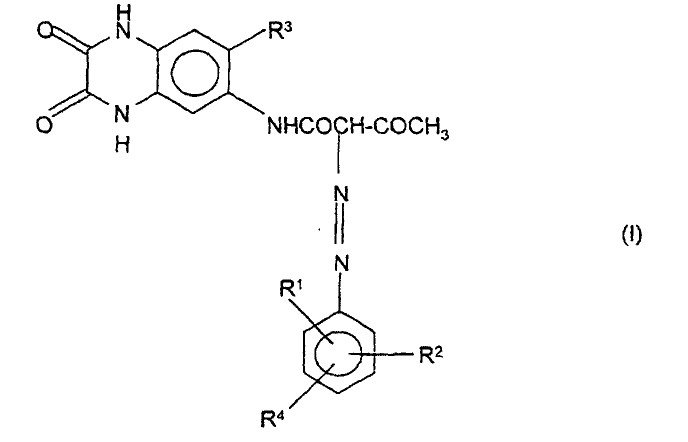 worin
R¹ und R² gleich oder verschieden sind und Cl, COO(C₁-C₄)-alkyl, CONH₂, CONCH₃, CON(CH₃)₂, oder SO₂NRR', wobei R und R' gleich oder verschieden sind und Wasserstoff, C₁-C₄-Alkyl oder Phenyl, wobei Phenyl durch Methyl, Ethyl, Methoxy, Ethoxy oder Halogen substituiert sein kann, bedeuten,
R³ Wasserstoff, Methyl, Methoxy, Ethoxy, Chlor oder Brom und
R⁴ Wasserstoff, C₁-C₃-Alkyl, Chlor oder Brom bedeuten.

2. Verbindung nach Anspruch 1, **gekennzeichnet durch** die Formeln (la), (Ib) oder (Ic) 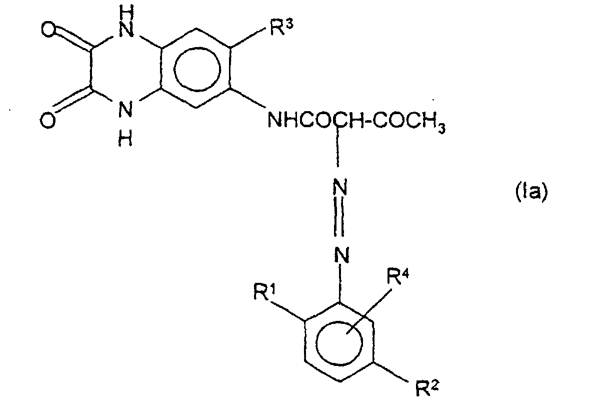 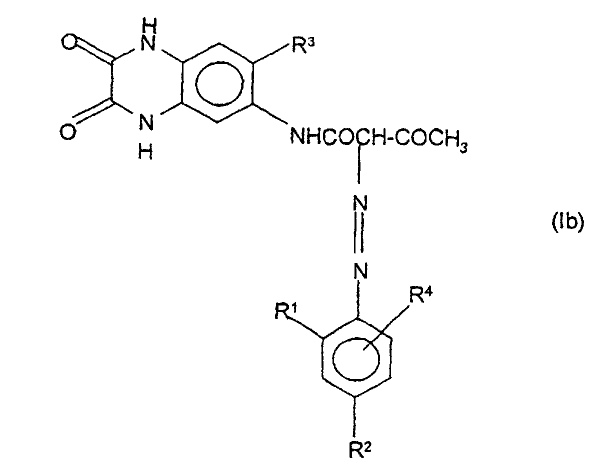 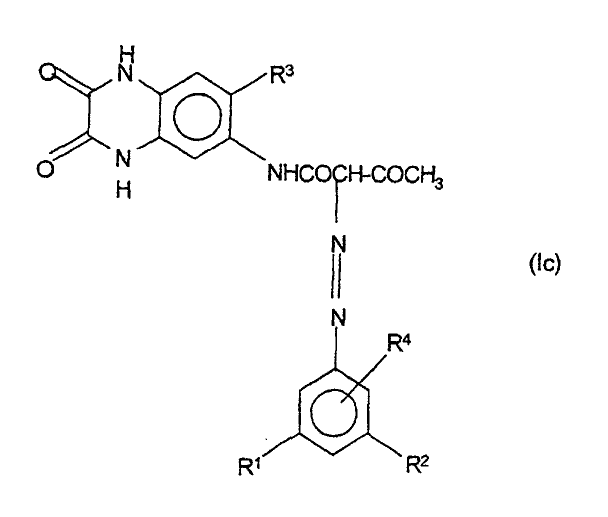 worin
die Reste R¹ und R² COOCH₃ oder COOC₂H₅,
R³ Wasserstoff, Methyl, Methoxy oder Chlor und
R⁴ Wasserstoff oder Methyl bedeuten.

3. Verbindung der Formel (Id) nach Anspruch 1 oder 2

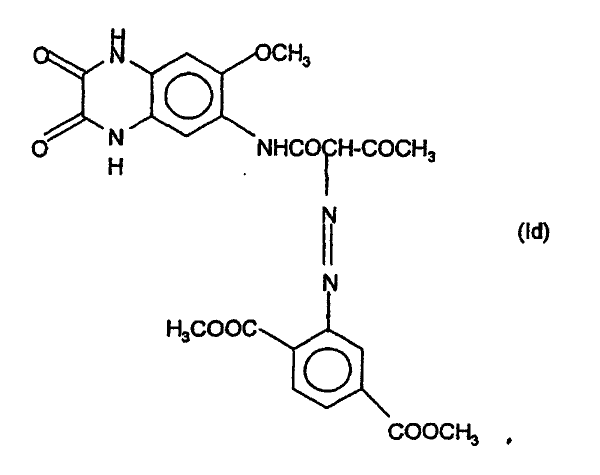

4. Verfahren zur Herstellung einer Verbindung der Formel (I) gemäß einem oder mehreren der Ansprüche 1 bis 3, **dadurch gekennzeichnet, daß** man ein Amin der Formel (II) 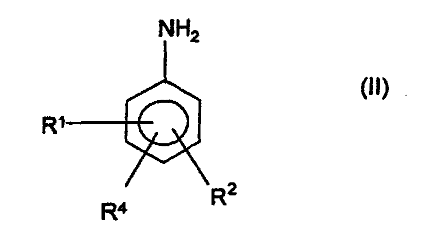 worin R¹, R², R⁴ die in Formel (I) definierten Bedeutungen haben, diazotiert und im molaren Verhältnis von 1:0,9 bis 1,1, bevorzugt 1:0,95 bis 1,05, mit einer Verbindung der Formel (III), 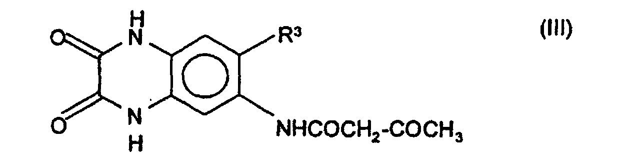 worin R³ die in Formel (I) definierte Bedeutung hat, kuppelt.

5. Verfahren nach Anspruch 4, **dadurch gekennzeichnet, daß** nach der Kupplung ein Lösemittelfinish in einem dipolar aprotischen Lösemittel durchgeführt wird.

6. Verfahren nach Anspruch 5, **dadurch gekennzeichnet, daß** das dipolar aprotische Lösemittel ein tertiäres Säureamid ist.

7. Verfahren nach Anspruch 5, **dadurch gekennzeichnet, daß** der Lösemittelfinish in N-Methylpyrrolidon, Dimethylformamid, Dimethylacetamid, Tetramethylharnstoff, 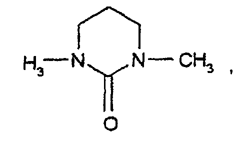 Dimethylsulfoxid oder Sulfolan durchgeführt wird.

8. Verfahren nach einem oder mehreren der Ansprüche 5 bis 7, **dadurch gekennzeichnet, daß** der Lösemittelfinish bei einer Temperatur von 100 bis 170°C durchgeführt wird.

9. Verwendung einer Verbindung der allgemeinen Formel (I) gemäß einem oder mehreren der Ansprüche 1 bis 3 zum Pigmentieren von hochmolekularen organischen Materialien, Lacken, Anstrichstoffen, Druckfarben, elektrophotographischen Tonern und Entwicklern, triboelektrisch oder elektrokinetisch versprühbaren Pulvern und Pulverlacken, und Tinten.

10. Verwendung nach Anspruch 9, **dadurch gekennzeichnet, daß** das hochmolekulare organische Medium ein wäßriger Automobilserienlack ist.

## Claims

1. A compound of the formula (I) 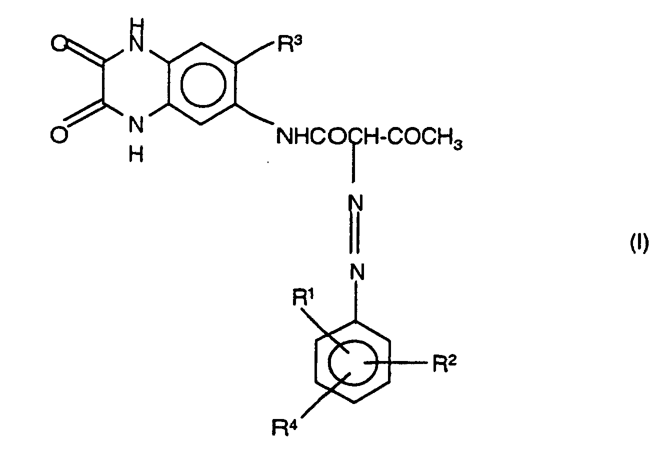 in which
R¹ and R² are identical or different and are Cl, COO(C₁-C₄)-alkyl, CONH₂, CONCH₃, CON(CH₃)₂ or SO₂NRR', where R and R' are identical or different and are hydrogen, C₁-C₄-alkyl or phenyl, it being possible for phenyl to be substituted by methyl, ethyl, methoxy, ethoxy or halogen,
R³ is hydrogen, methyl, methoxy, ethoxy, chloro or bromo, and
R⁴ is hydrogen, C₁-C₃-alkyl, chloro or bromo.

2. A compound as claimed in claim 1 of the formula (Ia), (Ib) or (Ic) 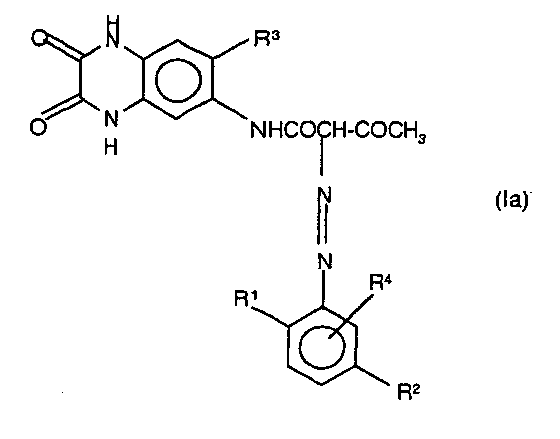 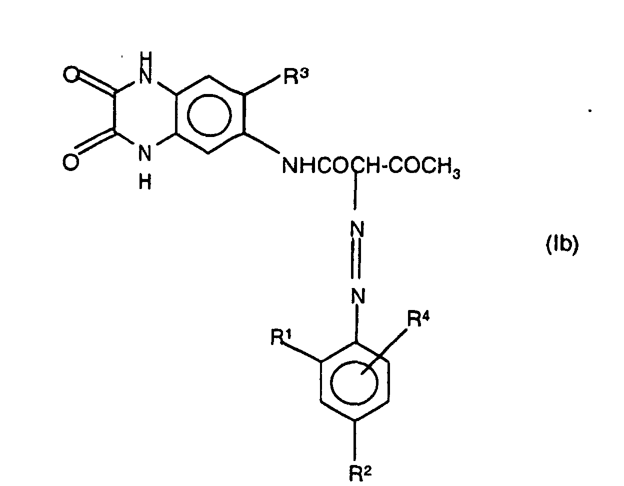 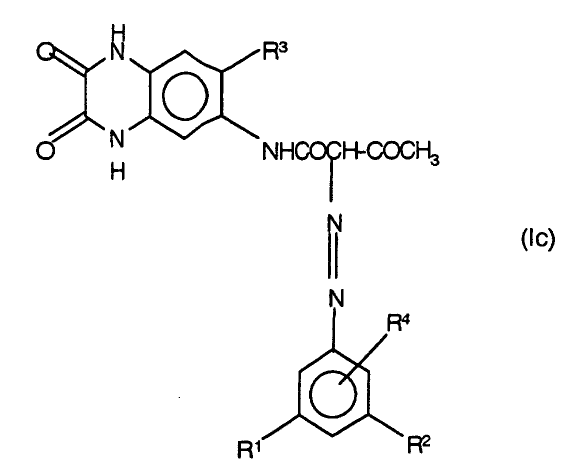 in which
the radicals R¹ and R² are COOCH₃ or COOC₂H₅,
R³ is hydrogen, methyl, methoxy or chloro, and
R⁴ is hydrogen or methyl.

3. A compound of the formula (Id) as claimed in claim 1 or 2

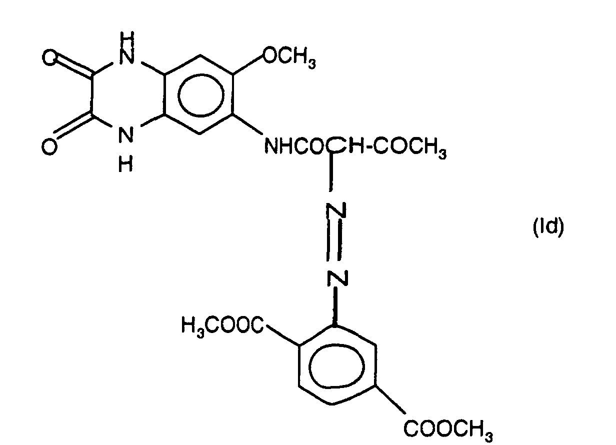

4. A process for preparing a compound of the formula (I) as claimed in one or more of claims 1 to 3, which comprises diazotizing an amine of the formula (II) 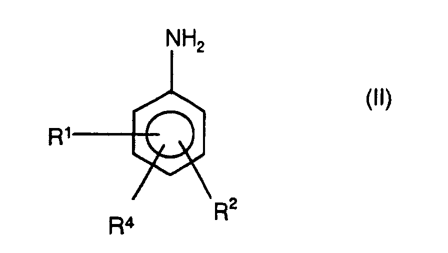 in which R¹, R² and R⁴ are as defined for formula (I) and coupling the product in a molar ratio of 1:0.9 to 1.1, preferably 1:0.95 to 1.05, with a compound of the formula (III) 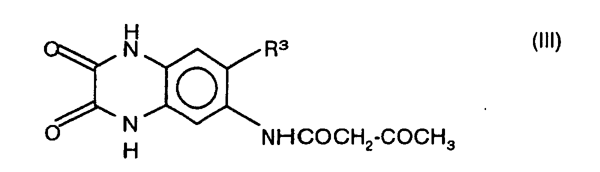 in which R³ is as defined for formula (I).

5. The process as claimed in claim 4, wherein coupling is followed by a solvent finish in a dipolar aprotic solvent.

6. The process as claimed in claim 5, wherein the dipolar aprotic solvent is a tertiary acid amide.

7. The process as claimed in claim 5, wherein the solvent finish is carried out in N-methylpyrrolidone, dimethylformamide, dimethylacetamide, tetramethylurea, 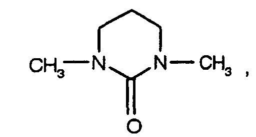 dimethyl sulfoxide or sulfolane.

8. The process as claimed in one or more of claims 5 to 7, wherein the solvent finish is carried out at a temperature from 100 to 170°C.

9. The use of a compound of the formula (I) as claimed in one or more of claims 1 to 3 for pigmenting high molecular mass organic materials, paints, other coating materials, printing inks, electrophotographic toners and developers, triboelectrically or electrokinetically sprayable powders and powder coatings, and inks.

10. The use as claimed in claim 9, wherein the high molecular mass organic medium is an aqueous automotive OEM finish.

## Revendications

1. Composé de formule (I) 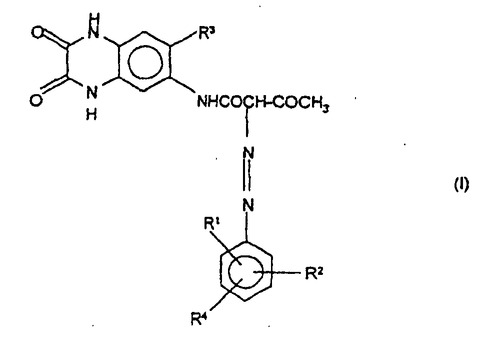 où
R¹ et R² sont identiques ou différents et représentent des groupes Cl, COO-alkyle en C₁-C₄, CONH₂, CONCH₃, CON(CH₃)₂ ou SO₂NRR', R et R' étant identiques ou différents et représentent un atome d'hydrogène, des groupes alkyle en C₁-C₄, ou phényle, phényle pouvant être substitué par des substituants méthyle, éthyle, méthoxy, éthoxy ou halogène,
R³ représente un atome d'hydrogène, des groupes méthyle, méthoxy, éthoxy, chlore ou brome et
R⁴ représente un atome d'hydrogène, des groupes alkyle en C₁-C₃, chlore ou brome.

2. Composé selon la revendication 1, **caractérisé par** les formules (Ia), (Ib) ou (Ic) 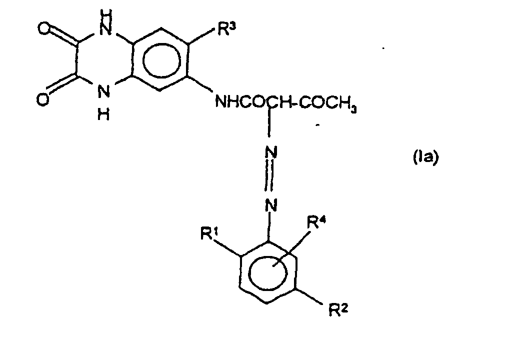 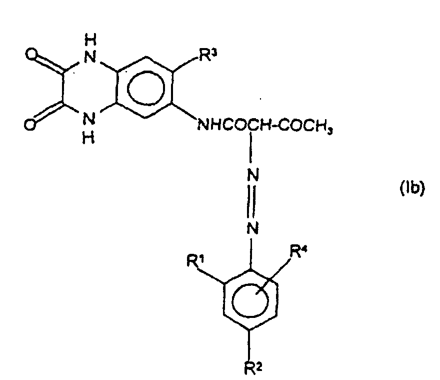 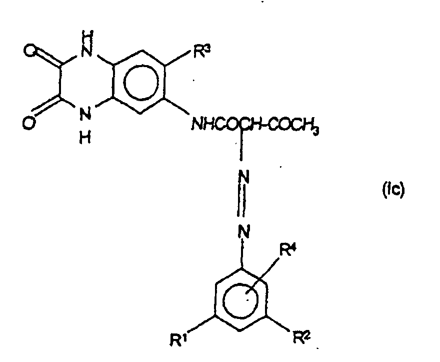 où les restes
R¹ et R² représentent des groupes COOCH₃ ou COOC₂H₅,
R³ représente un atome d'hydrogène, des groupes méthyle, méthoxy ou chloro, et
R⁴ représente un atome d'hydrogène ou un groupe méthyle.

3. Composé de formule (Id) selon la revendication 1 ou 2

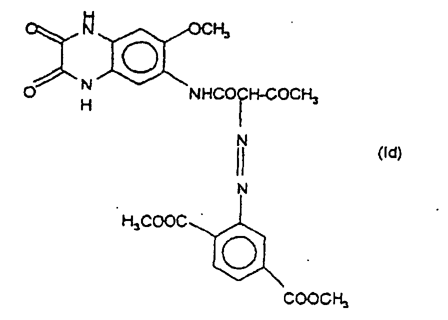

4. Procédé pour la préparation d'un composé de formule (I) selon une ou plusieurs des revendications 1 à 3, **caractérisé en ce qu'**on diazote une aminé de formule (II) 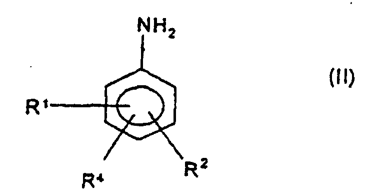 où R¹, R², R⁴ possèdent les significations définies à la formule (I), et on copule dans un rapport molaire de 1:0,9 à 1,1, de préférence de 1:0,95 à 1,05, sur un composé de formule (III) 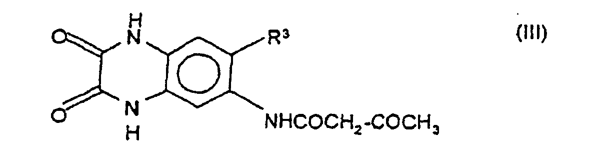 où R³ possède la signification définie à la formule (I).

5. Procédé selon la revendication 4, caractérisé en qu'on met en oeuvre une finition au solvant après la copulation dans un solvant aprotique dipolaire.

6. Procédé selon la revendication 5, **caractérisé en ce que** le solvant aprotique est un amide tertiaire d'acide.

7. Procédé selon la revendication 5, **caractérisé en ce qu'**on met en oeuvre la finition au solvant dans la N-méthyl-2-pyrrolidone, le diméthyl-formamide, le diméthylacétamide, la tétraméthylurée 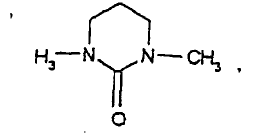 dimétylsulfoxyde ou sulfolane.

8. Procédé selon une ou plusieurs des revendications 5 à 7, **caractérisé en ce qu'**on met en oeuvre la finition au solvant à une température de 100 à 170°C.

9. Utilisation d'un composé de formule générale (I) selon une ou plusieurs des revendications 1 à 3 pour la pigmentation de matières organiques de haut poids moléculaire, de vernis, de peintures, d'encres d'imprimerie, de toners et de révélateurs électrophotographiques, de poudres ou de vernis en poudre applicables par pulvérisation triboélectrique ou éiectrocinétique, et d'encres.

10. Utilisation selon la revendication 9, **caractérisée en ce que** le milieu organique de haut poids moléculaire est un vernis aqueux pour automobile de série.
